(19) Europäisches Patentamt / European Patent Office / Office européen des brevets

(11) **EP 3 325 534 B1**

(12) **FASCICULE DE BREVET EUROPEEN**

(45) Date de publication et mention
de la délivrance du brevet:
**16.06.2021 Bulletin 2021/24**

(21) Numéro de dépôt: **16753410.6**

(22) Date de dépôt: **21.07.2016**

(51) Int Cl.:
*C08G 59/50* (2006.01)      *C08G 59/54* (2006.01)
*G21F 9/16* (2006.01)      *G21F 9/30* (2006.01)
*C08L 63/00* (2006.01)      *C08G 59/46* (2006.01)

(86) Numéro de dépôt international:
**PCT/FR2016/051904**

(87) Numéro de publication internationale:
**WO 2017/013374 (26.01.2017 Gazette 2017/04)**

(54) **COMPOSITION D'ENROBAGE POUR LE STOCKAGE OU LE CONFINEMENT DE DÉCHETS TOXIQUES POUR LA SANTÉ ET/OU L'ENVIRONNEMENT.**

VERKAPSELUNGSZUSAMMENSETZUNG ZUR LAGERUNG ODER ZUM EINSCHLUSS VON GESUNDHEITS- UND/ODER UMWELTGEFÄHRDENDEM ABFALL

ENCAPSULATION COMPOSITION FOR STORAGE OR CONFINEMENT OF WASTE WHICH IS TOXIC TO HEALTH AND/OR THE ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2015 FR 1556907**

(43) Date de publication de la demande:
**30.05.2018 Bulletin 2018/22**

(73) Titulaire: **Polynt Composites France
62320 Drocourt (FR)**

(72) Inventeur: **DHERSIN, Christine
62113 Sailly Labourse (FR)**

(74) Mandataire: **Santarelli
49, avenue des Champs-Elysées
75008 Paris (FR)**

(56) Documents cités:
**WO-A1-2005/123801      WO-A2-2010/004189
FR-A1- 2 825 182      FR-A1- 2 931 832
FR-A1- 2 977 894**

**EP 3 325 534 B1**

**Description**

L'invention concerne une composition d'enrobage pour le stockage ou le confinement de déchets toxiques pour la santé et/ou l'environnement, comprenant une composition de résine contenant au moins une résine époxy, et une composition de durcissement contenant au moins une polyamidoamine et au moins une polyamine aromatique, ladite composition d'enrobage ayant un taux d'aromaticité égal ou supérieur à 35%.

L'invention concerne également l'utilisation de cette composition pour l'enrobage desdits déchets.

Dans la suite de la description, on utilisera indifféremment les termes « composition d'enrobage », « matrice » ou « matrice de confinement ».

Les résines échangeuses d'ions utilisées pour purifier l'eau des installations nucléaires, qui, après utilisation et perte d'efficacité, doivent être stockées alors qu'elles ont fixé des radioéléments et présentent, de ce fait, une certaine radioactivité. D'autres éléments utilisés dans les centrales nucléaires, tels que les barreaux de magnésium, sont également contaminés après utilisation.

D'autres déchets, notamment non radioactifs, tels que des métaux lourds ou des matériaux contaminés par des métaux lourds nécessitent un confinement pour éviter leur dissémination dans l'environnement.

Ce type de déchets toxiques pour la santé et/ou l'environnement, en particulier les déchets radioactifs, doivent être stockés en respectant des règles de sécurité en vigueur.

On connaît un certain nombre de techniques pour enrober ces déchets en vue de leur stockage, mettant en jeu l'utilisation de résines d'enrobage époxy ou polyester, ou encore des techniques de vitrification permettant l'inactivation de ces déchets.

Par « enrobage », on entend un type de blocage satisfaisant à des tests spécifiques de confinement. On utilisera indifféremment les termes « blocage »ou « confinement », notamment par référence à la terminologie utilisée dans le domaine de l'ingénierie nucléaire.

La demande FR 2 825 182 décrit un système matriciel pour l'enrobage et le stockage d'un produit dangereux, dans lequel la composition d'enrobage comprend une résine époxy et une substance absorbant l'eau, permettant d'enrober des résines échangeuse d'ions à teneur élevée en eau résiduelle. Cette demande mentionne, parmi d'autres composés, l'utilisation de polyaminoamide en tant que durcisseur dans une composition d'enrobage à base de résine époxy (p.6, l.11-17). L'exemple 1 décrit un système matriciel dans lequel le durcisseur est une poylaminoamide. Compte tenu de la composition du bloc de déchet décrit dans l'exemple 1, p.9, le polymère réticulé obtenu a une densité de réticulation faible et aura une faible résistance aux radiations ainsi qu'une faible résistance mécanique (résistance à la compression). Cette faible densité de réticulation s'explique par le fait que les nœuds de réticulation qui créent le réseau tridimensionnel sont distants, notamment du fait du taux élevé de charges dans le bloc de déchet final (64 parties en poids de déchet et 5 parties en poids de silice absorbante).

Un procédé décrit dans le brevet US 4 599 196 met en œuvre un traitement préalable des résines échangeuse d'ions cationiques pour en atténuer le caractère acide, la composition de durcissement devant être adaptée en fonction de cette acidité.

Le brevet US 5 416 251 décrit un procédé d'enrobage de résine échangeuse d'ions dans lequel l'eau de ruissellement est bloquée par un agent hydrophobe formant un film, afin d'éviter l'inhibition de la réaction entre la résine et le durcisseur.

La demande FR2931832 décrit un procédé d'enrobage de déchets dangereux dont la composition de durcissement comprend un durcisseur constitué d'un mélange de polyamine aromatique et de polyamine cycloaliphatique. La polyamine aromatique figurant dans les exemples, à savoir la méthylènedianiline oligomère (ou MDA), CAS 25214-70-4, est classée Carcinogène 1B et mutagène 2 selon le règlement CLP mentionné plus haut. Cette formulation fait l'objet d'une obligation de recherche de substitution dans le cadre de la réglementation en vigueur en France.

Dans cette demande, la combinaison de polyamines aromatiques et de polyamines cycloaliphatiques permet d'optimiser la cinétique de la réaction d'enrobage.

La demande EP2297221 répondait au besoin de substituer la MDA classée CMR. Elle décrit une composition et un procédé d'enrobage pour le stockage de déchets toxiques pour la santé et/ou l'environnement dépourvus d'amine aromatique.

Depuis 2007, le règlement REACH (Règlement (CE) n° 1907/2006 du 18 décembre 2006, concernant l'enregistrement, l'évaluation et l'autorisation des substances chimiques, ainsi que les restrictions applicables à ces substances) définit de nouvelles classifications des substances.

Ainsi, le classement « SVHC » (Substance extrêmement préoccupante, en anglais « Substance of Very High Concern ») est défini par les classifications harmonisées européennes telles qu'énoncées à l'Annexe VI partie 3 du Règlement (CE) n° 1272/2008 du 16 décembre 2008 dit « CLP » relatif à la classification, à l'étiquetage et à l'emballage des substances et des mélanges, modifiant et abrogeant les Directives 67/548/CEE et 1999/45/CE, et modifiant le Règlement (CE) n° 1907/2006.

Dans ce contexte, il est recherché que la composition mise en œuvre pour l'enrobage des déchets toxiques

2

réponde non seulement à des spécifications techniques, en particulier en termes de stabilité aux radiations ionisantes (radio-résistance) mais également, de préférence, à cette nouvelle réglementation en utilisant des substances non SVHC, ni susceptibles de le devenir du fait de l'évolution de la réglementation.

Il existe donc un besoin d'une composition d'enrobage de déchets toxiques qui réponde à un ensemble de critères pour que le bloc de déchets enrobé soit autorisé à être stocké comme déchet ultime, à savoir, qui soit stable aux radiations, aisément manipulable à température ambiante et qui présente les propriétés de sécurité requises en matière, voire améliorées par rapport aux compositions existantes, notamment en matière de résistance à la compression et à la lixiviation, sans nécessiter de traitement préalable particulier du déchet à traiter, et qui puisse répondre aux exigences réglementaires en vigueur. Il est notamment également souhaité que la réaction époxy-amine ne soit pas affectée par la présence d'eau, et ce en l'absence de tout rajout additionnel d'agent spécifique absorbant l'eau, en plus du système réactionnel époxy-amine global (c'est à dire hormis les composants réactifs du système époxy-amine). L'adjonction d'un absorbant a un effet de dilution de la matrice d'enrobage et donc fragilise le réseau tridimensionnel, ce qui est contraire à l'objectif recherché.

Le problème technique à résoudre était, notamment, de définir une combinaison de composants au sein de la composition d'enrobage qui permette, simultanément :

- d'assurer un taux d'aromaticité suffisant pour répondre aux spécificités techniques requises, et donc, mettant en jeu un composé de type amine aromatique afin d'assurer les propriétés de radio-résistance et de résistance mécanique du bloc réticulé,
- de respecter la réglementation contraignante en vigueur, qui ne permet pas, de fait, d'utiliser certains composés qui auraient apporté un résultat satisfaisant sur le plan des propriétés techniques, et
- de répondre aux contraintes industrielles, notamment en termes de manipulation aisée (température ambiante) et de cinétique (réactivité contrôlée et exotherme inférieur à 90°C dans le cas des déchets humides).

On a maintenant trouvé que l'utilisation d'une composition d'enrobage, comprenant une composition de résine contenant au moins une résine époxy et une composition de durcissement contenant au moins une polyamidoamine et au moins une polyamine aromatique, ladite composition d'enrobage ayant un taux d'aromaticité égal ou supérieur à 35%, permettait d'atteindre ces objectifs et de remplir l'ensemble des critères mentionnés plus haut.

Avantageusement, le choix des composants de la composition d'enrobage (polyamidoamine, polyamine aromatique et résine époxy) permet de conduire à une cinétique de réticulation maitrisée et à un exotherme inférieur à 90°C, quelles que soient les quantités de composition d'enrobage mises en œuvre, en particulier dans le cas de l'inertage de déchets contenant de l'eau tels que les résines échangeuses d'ions (pouvant contenir jusqu'à 63% d'eau après essorage). Le but est de ne pas atteindre la température d'ébullition de l'eau pendant la réticulation, ce qui détériorerait les propriétés finales du colis réticulé.

Par « réticulation », on entend le branchement de chaînes de polymères entre elles par des ponts ou liaisons chimiques, afin de constituer un réseau macromoléculaire tridimensionnel de masse moléculaire infinie et présentant des propriétés physico-chimiques différentes du polymère initial. Dans le cas des résines thermodurcissables, celles-ci passent d'un état pâteux à un état solide. La réticulation est l'aboutissement de la polymérisation et est un processus irréversible résultant dans l'obtention d'un polymère tridimensionnel solide, infusible et insoluble.

Dans le cas des résines époxy, la réticulation s'effectue par réaction avec un durcisseur, ou, plus précisément, par réaction d'une composition de résine époxy avec une composition de durcissement (à base d'amines).

L'invention concerne donc, selon un premier aspect, une composition d'enrobage pour le stockage ou le confinement de déchets toxiques pour l'environnement et/ou la santé, comprenant :

- une composition de résine contenant au moins une résine époxy, et
- une composition de durcissement contenant au moins une polyamidoamine et au moins une polyamine aromatique,

ladite composition d'enrobage ayant un taux d'aromaticité égal ou supérieur à 35%.

Selon un aspect préféré, ladite composition de durcissement est constituée d'au moins une polyamidoamine et au moins une polyamine aromatique.

Avantageusement, ladite composition d'enrobage a un taux d'aromaticité de 35% à 45%.

Le taux d'aromaticité de la composition d'enrobage est calculé de la manière suivante et exprimé en pourcentage :

$$\frac{\text{Somme des masses molaires des cycles aromatiques présents dans la composition d'enrobage et inclus dans la chaîne du polymère}}{\text{Somme des masses molaires de l'ensemble des composants de la composition d'enrobage}}$$

De préférence, aux fins de l'invention, lesdits cycles aromatiques présents dans la composition d'enrobage et inclus dans la chaine de polymère sont des cycles benzéniques.

Comme indiqué plus haut, la formation d'un réseau de chaines de polymère par réticulation (branchement de chaînes de polymères entre elles par des ponts ou liaisons chimiques) est l'aboutissement de la polymérisation et est un processus irréversible résultant dans l'obtention d'un polymère tridimensionnel solide, infusible et insoluble ayant les propriétés techniques requises.

Le taux d'aromaticité de la composition d'enrobage provenant des cycles aromatiques inclus dans les chaines de polymère est une composante essentielle de ce réseau polymérique, notamment en ce qui concerne la stabilité aux radiations ionisantes.

Ladite composition d'enrobage peut être dépourvue de toute substance absorbant l'eau rajoutée en plus des composés réactifs du système époxy-amine. En effet, les polyamidoamines présentes dans la composition réactionnelle constituent un des composants réactifs du système époxy-amine, et peuvent réagir avec l'eau, par hydrolyse, ce qui permet de surmonter le problème de l'influence de l'eau de ruissellement sur le durcissement (c'est à dire sur la réaction de réticulation entre époxy et aminé).

De préférence, la composition d'enrobage comprend de 50 à 80%, en particulier 70 à 80%, en poids de composition à base de résine époxy et de 20 à 50%, en particulier 20 à 30%, en poids de la composition de durcissement.

## Composition de durcissement

La composition de durcissement utilisable dans la composition d'enrobage selon l'invention comprend au moins une polyamidoamine, et au moins une polyamine aromatique.

### a) Polyamidoamine

Par « polyamidoamine », on entend le produit de la réaction entre une polyamine aliphatique et un acide gras, ayant des fonctions terminales et/ou latérales amines (amidification avec excès d'amine par rapport à $CO_2H$).

L'utilisation des polyamidoamines dans la composition de durcissement présente de nombreux avantages :

- elles ne sont pas classées parmi les produits « CMR» (substances chimiques cancérogènes et/ou mutagènes et/ou toxiques pour la reproduction), ou susceptibles de le devenir du fait de l'évolution de la réglementation ;
- la présence simultanée de nombreuses fonctions amines assure la formation de nombreuses liaisons C-N avec les groupes époxy de la résine, permettant la formation d'un réseau époxydique plus compact :il en résulte une stabilité améliorée aux radiations et aux sollicitations mécaniques de type compression (stabilité à la déformation) et, plus particulièrement, une résistance à la compression non affectée après exposition aux rayonnements ionisants,
- leur cinétique de réticulation, relativement lente et contrôlée (réactivité contrôlée), permet de maîtriser la réactivité lors de la réticulation sans que la réactivité des composants réactifs soit affectée par la présence éventuelle d'eau, et ceci en l'absence de toute substance absorbant l'eau autre que les composants réactifs du système époxy-amine,
- elles peuvent être aisément mises en œuvre à température ambiante (10-40°C, de préférence 15-30°C), du fait de leur faible viscosité, de préférence inférieure à 4 Pa.s à 25°C, et ceci par simple mélange des composants.

On utilisera de préférence au moins une polyamidoamine ayant une durée de vie en pot jusqu'à gélification, c'est à dire jusqu'à viscosité tendant vers l'infini (en anglais « pot life ») à 25°C de 400 à 700 min, mesurée par la méthode du Gel timer sur 150 g de mélange avec une résine époxy diglycidyléther de bisphénol A (DGEBA).

Avantageusement, ladite polyamidoamidoamine ou ledit mélange de polyamidoamines a une viscosité à 25°C de l'ordre de 0,2 à 2 Pa.s.

De préférence, on utilisera au moins une polyamidoamine ayant un indice d'amine, correspondant à une masse équivalente par hydrogène actif, de l'ordre de 90 à 110 g/H.

Avantageusement, ladite polyamidoamine est le produit de la réaction d'une ou plusieurs polyéthylènepolyamine(s) avec un ou plusieurs acide(s) gras mono- ou poly-insaturé(s), et, de préférence, d' oligoéthylèneamines avec des acides gras mono- ou poly-insaturés en $C_{12}$-$C_{18}$.

Des polyamidoamines particulièrement préférées aux fins de l'invention peuvent être, par exemple, choisies parmi les produits suivants, qui sont des produits de réaction entre :

- une ou plusieurs polyéthylènepolyamine(s) (amine(s) aliphatique(s) par définition) de préférence choisie(s) parmi les oligoéthylèneamines, et plus préférentiellement, parmi les polyéthylènetétramines et les polyéthylènepentamines, telles que, par exemple la diéthylènetriamine, la triéthylènetétramine, la tétraéthylènetétramine, la tétraéthylènepentamine ou la bis(3-aminopropyl)éthylènediamine, et
- un ou plusieurs acide(s) gras mono- ou poly-insaturé(s) en $C_{12}$-$C_{18}$ (mono et/ou polyacides), tel(s) que, par exemple, l'acide oléique, linoléique, linolénique, l'acide palmitoléique ou l'acide myristique, de préférence, les acides gras poly-insaturés gras d'origine végétale, tels que les acides gras d'origine végétale contenus dans les résidus de distillation du bois, désignés en anglais par le terme« Tall oil », l'acide linoléique et l'acide alpha- ou gamma-linolénique étant particulièrement préférés.

Par ailleurs, les amidoamines sont susceptibles de se trouver en équilibre réversible avec la forme cyclisée imidazoline. On utilisera de préférence une polyamidoamine ou un mélange de polyamidoamines riche en imidazoline(s), dont la réactivité permet de réguler la vitesse de la réaction de réticulation et qui, avantageusement, sont susceptible(s) de réagir avec l'eau amenée par les déchets humides.

Une polyamidoamine préférée aux fins de l'invention est le produit de la réaction entre la tétraéthylènepentamine et les acides gras d'origine végétale contenus dans les résidus de distillation du bois, désignés de manière usuelle en anglais par le terme TOFA (pour « Tall Oil Fatty Acids »).

Selon un aspect de l'invention, on utilisera une polyamidoamine faiblement réactive, c'est à dire ayant une cinétique de réticulation relativement lente et contrôlée.

b) Polyamine aromatique

L'utilisation des polyamines aromatiques dans la composition de durcissement présente les avantages suivants :

- La réactivité des polyamines aromatiques est la plus lente dans la famille des aminés. Leur utilisation contribue à maitriser la cinétique et l'exotherme de réticulation de la composition d'enrobage constituée de polyamidoamines dont la cinétique est plus rapide.
- La présence de noyaux aromatiques améliore les propriétés mécaniques du réseau époxy-amine qui serait obtenu avec les polyamidoamines seules.
- La présence de groupements phényles confère un caractère hydrophobe à la composition de durcissement, améliorant ainsi la résistance à la lixiviation de la composition d'enrobage qui serait obtenue avec les polyamidoamines seules.
- Les noyaux aromatiques présents dans le réseau augmentent la résistance du matériau aux rayonnements ionisants. En effet, les cycles benzéniques ont une énergie de résonance propre, ce qui donne aux structures aromatiques une stabilité particulière et une bonne résistance à l'irradiation comparativement aux polymères aliphatiques.

Cependant, le choix d'une polyamine aromatique appropriée dans la composition de durcissement nécessite une sélection permettant d'obtenir un juste équilibre entre l'augmentation de l'aromaticité et la baisse de l'exothermie, afin que la cinétique de la réaction de réticulation de la composition d'enrobage reste compatible avec une fabrication industrielle.

Avantageusement, la polyamine aromatique utilisable aux fins de l'invention comprend au moins 2 fonctions amines primaires, de préférence 2, et au moins un cycle aromatique, de préférence 1 ou 2, et a un taux d'aromaticité égal ou supérieur à 35%.

Le taux d'aromaticité de la polyamine aromatique est calculé de la manière suivante et exprimé en pourcentage :

$$\frac{\text{Somme des masses molaires des cycles aromatiques présents dans la molécule}}{\text{Masse molaire de la molécule}}$$

De préférence, aux fins de l'invention, les cycles aromatiques présents dans la molécule sont des cycles benzéniques.

En particulier, ladite polyamine aromatique a un taux d'aromaticité de 35% à 70%, notamment de 38% à 65%.

De préférence, ladite polyamine aromatique est choisie parmi les diamines aromatiques primaires.

Selon un aspect préféré, la polyamine aromatique a un point de fusion inférieur ou égal à 130°C, de préférence de 35°C à 130°C.

Avantageusement, on choisira une polyamine aromatique dépourvue de toute substance classée « CMR » (substances chimiques cancérogènes et/ou mutagènes et/ou toxiques pour la reproduction) ou « SVHC » (Substance extrêmement préoccupante ou, en anglais, « Substance of Very High Concern »).

De polyamine aromatiques préférées aux fins de l'invention peuvent être, par exemple, choisies parmi les diamines aromatiques primaires, en particulier parmi : la diéthylméthylbenzènediamine, la 4,4'-méthylènebis[2,6-diéthylaniline], la 4,4'-méthylène-bis-(3-chloro-2,6-diéthylaniline), la 4,4'-méthylènebis(2,6-xylidine), la 4-méthyl-o-phénylènediamine, la 4-aminobenzylamine et la diéthyltoluènediamine (DETDA), utilisée seule ou en mélange.

On choisira de préférence au moins une polyamine aromatique, de préférence au moins une diamine aromatique ayant une masse équivalente par hydrogène actif de l'ordre de 80 à 100 g/H.

Avantageusement, on utilisera au moins une polyamine aromatique primaire, de préférence au moins une diamine aromatique primaire, ayant une viscosité faible permettant une mise en œuvre à température ambiante entre 15 et 30°C, et évitant le recours à l'utilisation de diluants, réactifs ou non, qui réduiraient les performances mécaniques de la composition d'enrobage. De préférence, la viscosité sera de l'ordre de 0.1 à 1 Pa.s à 25°C.

De préférence, on utilisera au moins une polyamine aromatique, de préférence au moins une diamine aromatique, réagissant à la température ambiante entre 15 et 30°C sans nécessiter d'apport de chaleur.

Des polyamines aromatiques primaires, en particulier des diamines aromatiques primaires, avantageuses sont celles dans lesquelles la symétrie des groupes $NH_2$ sur la molécule conduit à une homogénéité du réseau.

Une diamine aromatique préférée aux fins de l'invention est la diéthyltoluènediamine (DETDA). La DEDTA se présente sous forme d'un mélange d'isomères, dont l'isomère majoritaire est la 3,5 diéthyltoluène-2,4 diamine qui représente entre 77 et 81% en poids dudit mélange.

La composition de durcissement est, de préférence, composée de 40 à 60%, de préférence de 45 à 50%% d'amidoamine et de 40 à 60% de polyamine aromatique, de préférence 50 à 55 %, la somme des composants n'excédant pas 100%.

## Composition de résine

La composition de résine utilisable dans la composition d'enrobage selon l'invention est, de préférence, choisie de telle manière qu'elle assure une bonne complémentarité avec la composition de durcissement, notamment en termes de cinétique de durcissement et d'apport à la résistance mécanique du bloc de déchet enrobé. Cette résistance mécanique peut s'exprimer en termes de résistance à la compression, flexion, cisaillement, performances viscoélastiques, etc.

La composition de résine peut comprendre un mélange contenant la résine époxy ainsi que un ou plusieurs additifs, notamment choisis parmi des diluants réactifs, amorceurs ou plastifiants (non réactifs), des agents modificateurs de rhéologie, notamment agents thixotropes, des agents tensioactifs du type alcools gras éthoxylés ou esters d'acides gras et de polyols, ayant un rôle d'émulsifiant dans le cas de déchets aqueux, ou de mouillant dans le cas de déchets solides ou des agents séquestrants, du type EDTA (acide éthylènediaminetétraacétique) dans le cas de déchets métalliques ou déchets contenant des ions métalliques, et des agents hydrofugeants.

La résine époxy utilisable dans la composition d'enrobage aux fins de l'invention est, de préférence, une résine époxy dont la masse équivalente par époxy est comprise entre 190 et 210 g/mol. Ladite résine époxy incorpore éventuellement un diluant réactif, de préférence choisi parmi les monoépoxydes ou les époxydes multifonctionnels de viscosité inférieure à 0,5 Pa.s à 25°C.

De préférence, ladite résine époxy aura un taux d'aromaticité élevé, notamment de 35 à 55%, et de préférence de 40 à 50%, exprimé en pourcentage de la masse molaire des cycles benzéniques sur la masse molaire de la molécule.

Avantageusement, le nombre de fonctions époxyde, par molécule (monomère) de ladite résine époxy est de 2 à 5.

Ladite résine époxy aura, par exemple, une masse molaire en g/mol d'environ 300 à 800 g/mol, ce qui correspond à une masse équivalente par époxy située entre 125 et 225 exprimée en g/mol.

Une résine époxy préférée est une résine résultant de la réaction entre le bisphénol A et l'épichlorhydrine, en particulier la résine diglycidyléther de bisphénol A (DGEBA).

Selon un aspect préféré de l'invention, on utilisera un mélange de résines époxy de fonctionnalité d'au moins 2, de manière à augmenter la densité de liaisons (densité de réticulation) lors de la réticulation.

On utilisera, de préférence, un mélange de résine époxy bifonctionnelle, telle qu'une résine résultant de la réaction entre le bisphénol A et/ou le bisphénol F et l'épichlorhydrine, et d'au moins une résine polyfonctionnelle, c'est-à-dire une résine époxy ayant un nombre de fonctions époxy par monomère supérieur à 2, telles que, par exemple, les résines époxy de type phénol novolaque ou époxy tris(hydroxyphényl)méthane etc.

La composition de résine comprend, de préférence, un diluant époxyde réactif (par rapport aux amines), de préférence monofonctionnel ou polyfonctionnel, et plus préférentiellement de viscosité à 25°C inférieure à 0,5 Pa.s,-qui participe à la réaction entre les composés amines de la composition de durcissement et la résine époxy. Des diluants réactifs utilisables sont, par exemple, le p-*tert*-butylphénylglycidyléther, le crésylglycidyléther, l'éthylhexylglycidyléther ou triépoxyde comme le triglycidyléther de triméthylolpropane, le triglycidyl éther de glycérol. On utilisera de préférence l'éthylhexylglycidyléther.

La composition de résine peut comprendre un diluant non réactif permettant d'adapter la viscosité de la résine époxy et d'amorcer la réaction epoxy-amine par l'action catalytique de ses fonctions hydroxyles. Ce diluant « amorceur » utilisable dans la composition de résine peut être un solvant hydrophile choisi, par exemple, parmi les alcools de masse molaire égale ou supérieure à 100 g/mol et partiellement miscibles à l'eau. De plus, de par son caractère hydrophile, ledit diluant favorise le contact entre le déchet à enrober, par exemple une résine échangeuse d'ions, et la composition de résine, favorisant ainsi l'homogénéité du déchet enrobé final. Un composé préféré à cet effet est l'alcool benzylique.

Avantageusement, la composition de résine de ladite composition d'enrobage selon l'invention comprend un agent thixotrope qui permet de contrôler la baisse de la viscosité, en particulier au début de la réaction, et participe à la maîtrise de l'exothermie.

On utilisera, de préférence, un agent thixotrope hydrophobe qui permet, en particulier l'obtention d'un déchet enrobé de manière homogène, en limitant la remontée du déchet dans la composition d'enrobage lorsqu'il est léger, par exemple dans le cas de résines échangeuse d'ions.

Des agents thixotropes hydrophobes utilisables peuvent être choisis, par exemple, parmi la silice pyrogénée hydrophobe et l'argile modifiée organophile telle qu'obtenue par modification par le greffage d'un agent greffant organique hydrophobe.

Selon la nature du déchet à enrober, la composition de résine peut également comprendre un ou plusieurs agent(s) tensioactif(s) ou agent(s) séquestrant(s) ou agent(s) hydrofugeant(s), comme décrit plus haut.

Notamment, dans le cas de l'enrobage de résines échangeuses d'ions on utilisera un agent tensioactif pour améliorer la cohésion par un meilleur mouillage et une meilleure adhésion entre la composition d'enrobage et la résine échangeuse d'ions à enrober.

On utilisera dans ce cas, de préférence, un agent tensioactif non ionique, notamment un agent tensioactif non ionique non dilué dans l'eau (anhydre) hydrophile, tel que, par exemple, ceux choisis parmi les alcools gras éthoxylés et les polyéthers de siloxane.

Des agents hydrofugeants, tels que, par exemple, le triméthoxy(méthyl)silane, le siloxane modifié polyester, ou encore, de préférence un agent hydrofugeant comportant une fonction époxyde capable de créer une liaison avec une fonction amine de la composition de durcissement, tel que le glycidoxypropyltriméthyloxysiloxane, peuvent également être avantageusement utilisés.

Dans le cas d'autres déchets à enrober, notamment pour l'enrobage de métaux, on utilisera, par exemple, un agent séquestrant ou complexant approprié comportant des groupements qui interagissent avec l'élément métallique à enrober, par exemple des groupements -$CO_2$H, comme l'EDTA.

Le type d'agent tensioactif ou séquestrant à inclure dans la composition de résine pourra varier en fonction des besoins et de l'effet souhaité.

De préférence, la composition de résine comprend, par rapport au poids total de la composition de résine :

- 70 à 90% en poids d'une résine époxy ou d'un mélange de résine époxy, de préférence 85 à 90%,
- 5 à 15% en poids d'un diluant réactif, de préférence 8 à 12%,
- 5 à 15% en poids d'un diluant plastifiant, de préférence 5 à 10%,
- 0 à 3% en poids d'un agent thixotrope, de préférence 1 à 2%, et
- 0 à 2% d'au moins un agent tensioactif ou séquestrant ou hydrofugeant,

la somme des composants de la composition de résine n'excédant pas 100%.

De manière optionnelle, on peut également ajouter à la composition d'enrobage, après mélange de la composition de durcissement et de la composition de résine, un additif de renfort permettant d'améliorer les propriétés mécaniques ainsi que la résistance aux radiations du bloc de déchet enrobé, par exemple à raison de 0 à 10% en poids total de la composition d'enrobage.

On peut utiliser, par exemple, des fibres de verre courtes, des fibres de carbone, des fibres céramiques ou des fibres organiques de synthèse, les fibres de verre, de carbone et les fibres céramiques étant préférées Le choix du type de matériau ou additif de renfort sera fonction du niveau des propriétés de résistance recherchées.

L'invention concerne également l'utilisation d'une composition d'enrobage telle que définie plus haut pour la préparation d'un bloc de déchet enrobé, ainsi que le bloc de déchet enrobé ainsi obtenu.

En particulier, ledit bloc de déchet enrobé peut comprendre de 30 à 60% en poids de composition d'enrobage et de 70 à 40% en poids de déchet.

Ledit bloc de déchet enrobé peut être préparé par un procédé comprenant les étapes consistant à :

i) préparer une composition d'enrobage par mélange d'une composition de résine et d'une composition de durcissement telles que définies ci-dessus, et

ii) incorporer le déchet à enrober dans ladite composition d'enrobage, et

iii) enrober et réticuler jusqu'à obtention d'un bloc de déchet enrobé et durci.

De manière optionnelle, on ajoutera un additif de renfort à la composition d'enrobage dans une étape intermédiaire se situant avant l'incorporation de déchet à enrober et après la préparation de la composition d'enrobage.

Le mélange de la composition de résine et de la composition de durcissement peut être effectué, par exemple, à une température de 15 à 30°C. Si nécessaire, la composition de résine, d'une part, et la composition de durcissement, d'autre part, peuvent être chauffées ou refroidies avant mélange, notamment jusqu'à une température de 20 à 25°C.

Le déchet à enrober peut être un déchet sous forme solide, éventuellement divisée, ou sous forme semi-liquide, telle qu'une boue ou une pâte visqueuse.

En particulier, la composition d'enrobage peut être utilisée pour stocker ou confiner des déchets radioactifs, tels que, par exemple, des résines échangeuses d'ions anioniques ou cationiques et leurs mélanges, des barreaux de magnésium contaminés, des pièces métalliques irradiées telles que pièces irradiées par une faible ou moyenne radioactivité ou les cendres radioactives. Donc, la composition selon l'invention est particulièrement utile et utilisée pour l'enrobage et le stockage et/ou le confinement de déchets toxiques pour la santé et/ou pour l'environnement.

La composition d'enrobage peut alternativement être utilisée pour stocker ou confiner des déchets toxiques non radioactifs, tels que, par exemple, des métaux lourds ou des matériaux en contenant, des pièces métalliques divisées provenant du démantèlement d'ateliers industriels ou des produits générant ou libérant des substances nocives, telles que la dioxine, le phosgène, $NH_3$, morpholine, hydrazine, $SO_2$ ou $SO_3$.

Le déchet enrobé par la composition d'enrobage selon l'invention, sous forme de bloc, présente des propriétés de résistance à la compression élevées, ainsi qu'une bonne résistance chimique aux agressions par des agents acides ou basiques, ou des agents oxydants, de la lumière, ainsi qu'une résistance élevée à la lixiviation. Il présente des bonnes performances mécaniques en compression, en particulier après exposition à un rayonnement ionisant, ainsi qu'une résistance en cisaillement, avec d'excellentes performances mécaniques dynamiques.

L'invention est illustrée de manière non limitative par les exemples suivants.

Exemple 1 : préparation d'une composition d'enrobage

On a préparé la composition d'enrobage suivante :

1) Composition de résine époxy

| Composant | Teneur (en % pondéral) |
|---|---|
| Résine époxy diglycidyléther de bisphénol A (DGEBA) fonctionnalité f = 2 | 89 |
| éthylhexyldiglycidyléther (diluant réactif) fonctionnalité époxy = 2 | 6,9 |
| Alcool benzylique (diluant plastifiant) | 2,9 |
| Silice pyrogénée hydrophobe (agent thixotrope) | 1,2 |

2) Composition de durcissement avec 31,75 parties de composition de durcisseur pour 100 parties de composition de résine époxy (soit 24,1 % de durcisseur)

| Composant | Teneur (en % pondéral) |
|---|---|
| Produit de réaction entre la tétraéthylènepentamine et les acides gras d'origine végétale contenus dans les résidus de distillation du bois (TOFA) (Ancamide 506 d'AIR PRODUCTS) | 55 |
| DETDA (lonzacure DETDA 80 de LONZA) Taux d'aromaticité = 41% | 45 |

Le mélange a été réalisé en malaxant pendant 5 à 10 min à température ambiante comprise entre 15 et 30 C la composition de résine avec la composition de durcissement, celles-ci étant préalablement dosées et amenées à une température de 20 à 25°C. Le taux d'aromaticité de la composition d'enrobage est de 36,4%. Ce taux d'aromaticité élevé permet à la composition d'enrobage obtenue de répondre aux spécificités techniques requises en matière de résistance aux radiations ionisantes et de résistance mécanique.

Le déchet à enrober est incorporé immédiatement après réalisation du mélange.

Exemple 2 : enrobage d'une résine échangeuse d'ions

On mélange, dans un fût métallique de 200 l, 58 kg de composition de résine époxy et 28 kg de composition de durcissement de l'exemple 1.

Le mélange est malaxé à l'aide d'un mobile de malaxage de diamètre 520 mm, à un seul étage et 4 pales de largeur 200 mm orientées à 45°, avec un agitateur à une vitesse de 60 tours/min pendant 1 à 2 min.

119 kg de résines échangeuses d'ions polystyrèniques ou acryliques ioniquement équilibrées (Amberlite MB20 de ROHM&HAAS) sont alors immédiatement introduits sous agitation dans le mélange à un débit de 500 kg/h, puis on mélange le tout pendant 7 min à 60 tours/min, puis 7 min à 140 tours/min.

Après un arrêt de 5 min pour dégazage, le mélange est homogénéisé pendant 5 min à 140 tours/min.

On obtient un bloc de résine échangeuse d'ions enrobée de 205 kg.

En termes de cinétique et d'exotherme, les valeurs mesurées en cours de polymérisation sont également au cahier des charges de de l'Agence nationale de gestion des déchets radioactifs (ANDRA) et respectent notamment une température maximale atteinte inférieure à 90°C, ce qui répond aux spécificités techniques requises en termes de cinétique.

Les résultats obtenus avec l'essai réalisé selon les exemples 1 et 2 montrent que les performances en termes de résistance à la compression répondent aux exigences de l'ANDRA, à savoir une valeur de contrainte à la rupture supérieure à 8MPa, ce qui répond aux spécificités techniques requises en termes de résistance mécanique.

**Revendications**

1. Composition d'enrobage pour le stockage ou le confinement de déchets toxiques, comprenant :

   - une composition de résine contenant au moins une résine époxy, et
   - une composition de durcissement contenant au moins une polyamidoamine et au moins une polyamine aromatique,

   ladite composition d'enrobage ayant un taux d'aromaticité égal ou supérieur à 35%, ledit taux d'aromaticité étant défini de la manière suivante et exprimé en pourcentage

$$\frac{\text{Somme des masses molaires des cycles aromatiques présents dans la composition d'enrobage et inclus dans la chaîne du polymère}}{\text{Somme des masses molaires de l'ensemble des composants de la composition d'enrobage}}$$

2. Composition selon la revendication 1, **caractérisée en ce qu'**elle comprend de 50 à 80% en poids de la composition de résine à base de résine époxy et de 20 à 50% en poids de la composition de durcissement.

3. Composition selon l'une des revendications 1 ou 2, **caractérisée en ce que** ladite polyamidoamine est choisie parmi les produits de réaction entre une ou plusieurs polyéthylènepolyamine(s) aliphatique(s) et un ou plusieurs acide(s) gras mono- ou poly-insaturé(s) en C12-C18.

4. Composition selon l'une quelconque des revendications 1 à 3, **caractérisée en ce que** la polyéthylènepolyamine aliphatique est choisie parmi les polyéthylènetétramines et les polyéthylènepentamines.

**5.** Composition selon la revendication 3, **caractérisée en ce que** la polyéthylènepolyamine aliphatique est choisie parmi la diéthylènetriamine, la triéthylènetétramine, la tétra-éthylènetétramine, la tétraéthylènepentamine ou la bis(3-aminopropyl)éthylènediamine.

**6.** Composition selon l'une quelconque des revendications 1 à 5, **caractérisée** en ce ladite polyamine aromatique a un taux d'aromaticité de 35% à 70%, notamment de 38% à 65%, ledit taux d'aromaticité étant défini de la manière suivante et exprimé en pourcentage :

$$\frac{\text{Somme des masses molaires des cycles aromatiques présents dans la molécule}}{\text{Masse molaire de la molécule}}$$

**7.** Composition selon l'une quelconque des revendications 1 à 6, **caractérisée** en ce ladite polyamine aromatique a un point de fusion inférieur ou égal à 130°C, de préférence de 35°C à 130°C.

**8.** Composition selon l'une quelconque des revendications 1 à 7, **caractérisée en ce que** ladite terpolyamine aromatique a une masse équivalente par hydrogène actif de l'ordre de 80 à 100 g/H.

**9.** Composition selon l'une quelconque des revendications 1 à 8, **caractérisée en ce que** ladite polyamine aromatique est choisie parmi la diéthylméthylbenzènediamine, la 4,4'-méthylènebis[2,6-diéthylaniline], la 4,4'-méthylène-bis-(3-chloro-2,6-diéthylaniline), la 4,4'-méthylènebis(2,6-xylidine), la 4-méthyl-o-phénylènediamine et la 4-aminobenzylamine et la diéthyltoluènediamine (DETDA), utilisée seule ou en mélange.

**10.** Composition selon l'une quelconque des revendications 1 à 9, **caractérisée en ce que** la polyamidoamine est le produit de la réaction entre la tétraéthylènepentamine et les acides gras d'origine végétale contenus dans les résidus de distillation du bois (TOFA) et la polyamine aromatique est la diéthyltoluènediamine (DETDA).

**11.** Composition selon la revendication 10, **caractérisée en ce qu'**on utilise comme résine époxy un mélange de résine résultant de la réaction entre le bisphénol A et/ou le bisphénol F et l'épichlorhydrine, de préférence la résine résultant de la réaction entre le bisphénol A et l'épichlorhydrine qui est la résine diglycidyléther de bisphénol A (DGEBA).

**12.** Composition selon la revendication 11, **caractérisée en ce que** la composition de résine comprend, par rapport au poids total de la composition de résine :

- 70 à 90% en poids d'au moins une résine époxy, de préférence 85 à 90%,
- 5 à 15% en poids d'un diluant réactif, de préférence 8 à 12%,
- 5 à 15% en poids d'un diluant plastifiant, de préférence 5 à 10%,
- 0 à 3% en poids d'un agent thixotrope, de préférence 1 à 2%, et
- 0 à 2% d'au moins un agent tensioactif, ou agent séquestrant, ou agent hydrofugeant,

la somme des composants de la composition de résine n'excédant pas 100%.

**13.** Utilisation d'une composition selon l'une quelconque des revendications 1 à 12 pour la préparation d'un bloc de déchet enrobé.

**14.** Utilisation selon la revendication 13, **caractérisée en ce que** ledit bloc de déchet enrobé est préparé par un procédé comprenant les étapes consistant à :

(i) préparer une composition d'enrobage par mélange d'une composition de résine et d'une composition de durcissement telles que définies dans l'une quelconque des revendications 1 à 12, et
(ii) incorporer le déchet à enrober dans ladite composition d'enrobage, et
(iii) enrober et réticuler jusqu'à obtention d'un bloc de déchet enrobé et durci.

**15.** Utilisation selon l'une des revendications 13 ou 14, **caractérisée en ce que** l'une au moins des conditions suivantes est remplie :

- le déchet à enrober est sous forme solide ou sous forme semi-liquide ;
- le déchet à enrober est un déchet radioactif ou non radioactif ;
- ledit déchet est choisi parmi les résines échangeuses d'ions anioniques ou cationiques et leurs mélanges, les barreaux de magnésium contaminés, les pièces métalliques irradiées et les cendres radioactives, ou encore parmi les métaux lourds ou les matériaux en contenant les pièces métalliques divisées provenant du démantèlement d'ateliers industriels et des produits générant ou libérant des substances nocives ;
- ledit bloc de déchet enrobé comprend de 30 à 60% en poids de composition d'enrobage et de 70 à 40% en poids de déchet.

**Patentansprüche**

1. Ummantelungs-Zusammensetzung für die Lagerung oder den Einschluss giftiger Abfälle, welche umfasst:

   - eine Harzzusammensetzung, die mindestens ein Epoxidharz enthält, und
   - eine Härtungszusammensetzung, die mindestens ein Polyamidoamin und mindestens ein aromatisches Polyamin enthält,

   wobei die Ummantelungs-Zusammensetzung einen Aromatizitätsanteil gleich oder höher als 35% aufweist, wobei der Aromatizitätsanteil auf die folgende Weise definiert und als Prozentsatz ausgedrückt ist:

$$\frac{\text{Summe der molaren Massen der aromatischen Ringe, die in der Ummantelungs-Zusammensetzung vorhanden und in der Polymerkette enthalten sind}}{\text{Summe der molaren Massen der Gesamtheit der Bestandteile der Ummantelungs-Zusammensetzung.}}$$

2. Zusammensetzung nach Anspruch 1, **dadurch gekennzeichnet, dass** sie 50 bis 80 Gewichtsprozent der Harzzusammensetzung auf Epoxidharzbasis und 20 bis 50 Gewichtsprozent der Härtungszusammensetzung umfasst.

3. Zusammensetzung nach einem der Ansprüche 1 oder 2, **dadurch gekennzeichnet, dass** das Polyamidoamin aus den Produkten der Reaktion zwischen einem oder mehreren aliphatischen Polyethylenpolyamin(en) und einer oder mehreren einfach oder mehrfach ungesättigten $C_{12}$-$C_{18}$-Fettsäure(n) ausgewählt ist.

4. Zusammensetzung nach einem der Ansprüche 1 bis 3, **dadurch gekennzeichnet, dass** das aliphatische Polyethylenpolyamin aus Polyethylentetraminen und Polyethylenpentaminen ausgewählt ist.

5. Zusammensetzung nach Anspruch 3, **dadurch gekennzeichnet, dass** das aliphatische Polyethylenpolyamin aus Diethylentriamin, Triethylentetramin, Tetraethylentetramin, Tetraethylenpentamin oder Bis(3-aminopropyl)ethylendiamin ausgewählt ist.

6. Zusammensetzung nach einem der Ansprüche 1 bis 5, **dadurch gekennzeichnet, dass** das aromatische Polyamin einer Aromatizitätsanteil von 35% bis 70%, insbesondere 38% bis 65%, aufweist, wobei der Aromatizitätsanteil auf die folgende Weise definiert und als Prozentsatz ausgedrückt ist:

$$\frac{\text{Summe der molaren Massen der im Molekül vorhandenen aromatischen Ringe}}{\text{Molare Masse des Moleküls.}}$$

7. Zusammensetzung nach einem der Ansprüche 1 bis 6, **dadurch gekennzeichnet, dass** das aromatische Polyamin einen Schmelzpunkt niedriger als oder gleich 130°C, bevorzugt von 35°C bis 130°C aufweist.

8. Zusammensetzung nach einem der Ansprüche 1 bis 7, **dadurch gekennzeichnet, dass** das aromatische Polyamin eine äquivalente Masse pro aktivem Wasserstoff im Bereich von 80 bis 100 g/H aufweist.

9. Zusammensetzung nach einem der Ansprüche 1 bis 8, **dadurch gekennzeichnet, dass** das aromatische Polyamin aus Diethylmethylbenzoldiamin, 4,4'-Methylenbis[2,6-diethylanilin], 4,4'-Methylen-bis-(3-chlor-2,6-diethylanilin), 4,4'-Methylenbis(2,6-xylidin), 4-Methyl-o-phenylendiamin, 4-Aminobenzylamin und Diethyltoluoldiamin (DETDA) ausgewählt ist, welches einzeln oder im Gemisch verwendet wird.

10. Zusammensetzung nach einem der Ansprüche 1 bis 9, **dadurch gekennzeichnet, dass** das Polyamidoamin das Produkt der Reaktion zwischen Tetraethylenpentamin und in Holzdestillationsrückständen enthaltenen Fettsäuren pflanzlichen Ursprungs (TOFA) ist, und das aromatische Polyamin Diethyltoluoldiamin (DETDA) ist.

11. Zusammensetzung nach Anspruch 10, **dadurch gekennzeichnet, dass** als Epoxidharz ein bei der Reaktion zwischen Bisphenol A und/oder Bisphenol F und Epichlorhydrin entstehendes Harzgemisch verwendet wird, bevorzugt das bei der Reaktion zwischen Bisphenol A und Epichlorhydrin entstehende Harz, welches Bisphenol-A-diglycidylether-Harz (DGEBA) ist.

12. Zusammensetzung nach Anspruch 11, **dadurch gekennzeichnet, dass** die Harzzusammensetzung, bezogen auf das Gesamtgewicht der Harzzusammensetzung, umfasst:

- 70 bis 90, bevorzugt 85 bis 90 Gewichtsprozent eines Epoxidharzes,
- 5 bis 15, bevorzugt 8 bis 12 Gewichtsprozent eines Reaktivverdünners,
- 5 bis 15, bevorzugt 5 bis 10 Gewichtsprozent eines weichmachenden Verdünners,
- 0 bis 3, bevorzugt 1 bis 2 Gewichtsprozent eines Thixotropiermittels, und
- 0 bis 2 Prozent mindestens eines Tensids oder Sequestriermittels oder wasserabweisenden Mittels,

wobei die Summe der Bestandteile der Harzzusammensetzung 100 Prozent nicht überschreitet.

13. Verwendung der Zusammensetzung nach einem der Ansprüche 1 bis 12 zur Herstellung eines ummantelten Abfallblocks.

14. Verwendung nach Anspruch 13, **dadurch gekennzeichnet, dass** der ummantelte Abfallblock durch ein Verfahren hergestellt wird, das Schritte umfasst, welche bestehen aus:

(i) Herstellen einer Ummantelungs-Zusammensetzung durch Vermischen einer Harzzusammensetzung und einer Härtungszusammensetzung, wie sie in einem der Ansprüche 1 bis 12 definiert sind, und
(ii) Einarbeiten des zu ummantelnden Abfalls in die Ummantelungs-Zusammensetzung, und
(iii) Ummanteln und Vernetzen, bis ein ummantelter und ausgehärteter Abfallblock erhalten wird.

15. Verwendung nach einem der Ansprüche 13 oder 14, **dadurch gekennzeichnet, dass** mindestens eine der folgenden Bedingungen erfüllt ist:

- der zu ummantelnde Abfall ist in fester Form oder halbflüssiger Form;
- der zu ummantelnde Abfall ist ein radioaktiver Abfall oder ein nicht radioaktiver Abfall;
- der Abfall ist ausgewählt aus anionischen oder kationischen Ionenaustauschharzen und deren Mischungen, verunreinigten Magnesiumstäben, bestrahlten Metallteilen und radioaktiven Aschen, oder auch aus Schwermetallen oder Materialien, die selbige enthalten, zerteilten Metallteilen, die aus dem Rückbau von Industrieanlagen stammen, und Produkten, die Schadstoffe erzeugen oder freisetzen;
- der Abfallblock umfasst 30 bis 60 Gewichtsprozent der Ummantelungs-Zusammensetzung und 70 bis 40 Gewichtsprozent Abfall.

**Claims**

1. Encapsulation composition for the storage or confinement of toxic waste, comprising:

- a resin composition containing at least one epoxy resin, and
- a hardening composition containing at least one polyamidoamine and at least one aromatic polyamine,

said encapsulation composition having a degree of aromaticity greater than or equal to 35%, said degree of aromaticity being defined as follows and expressed as a percentage:

$$\frac{\text{Sum of the molar masses of the aromatic rings present in the encapsulation composition and included in the polymer chain}}{\text{Sum of the molar masses of all of the components of the encapsulation composition}}$$

2. Composition according to claim 1, **characterized in that** it comprises from 50 to 80% by weight of the resin composition based on epoxy resin and from 20 to 50% by weight of the hardening composition.

3. Composition according to one of claims 1 or 2, **characterized in that** said polyamidoamine is selected from the products of the reaction between one or more aliphatic polyethylene polyamine(s) and one or more mono- or poly-unsaturated $C_{12}$-$C_{18}$ fatty acid(s).

4. Composition according to any one of claims 1 to 3, **characterized in that** the aliphatic polyethylene polyamine is selected from the polyethylenetetramines and the polyethylenepentamines.

5. Composition according to claim 3, **characterized in that** the aliphatic polyethylene polyamine is selected from diethylenetriamine, triethylenetetramine, tetraethylenetetramine, tetraethylenepentamine or bis(3-aminopropyl)ethylenediamine.

6. Composition according to any one of claims 1 to 5, **characterized in that** said aromatic polyamine has a degree of aromaticity from 35% to 70%, in particular from 38% to 65%, said degree of aromaticity being defined as follows and expressed as a percentage:

$$\frac{\text{Sum of the molar masses of the aromatic rings present in the molecule}}{\text{Molar mass of the molecule}}$$

7. Composition according to any one of claims 1 to 6, **characterized in that** said aromatic polyamine has a melting point less than or equal to 130°C, preferably from 35°C to 130°C.

8. Composition according to any one of claims 1 to 7, **characterized in that** said aromatic polyamine has an equivalent weight per active hydrogen of the order of 80 to 100 g/H.

9. Composition according to any one of claims 1 to 8, **characterized in that** said aromatic polyamine is selected from diethylmethylbenzenediamine, 4,4'-methylene-bis[2,6-diethylaniline], 4,4'-methylene-bis(3-chloro-2,6-diethylaniline), 4,4'-methylene-bis(2,6-xylidine), 4-methyl-o-phenylenediamine and 4-aminobenzylamine and diethyltoluenediamine (DETDA), used alone or in a mixture.

10. Composition according to any one of claims 1 to 9, **characterized in that** the polyamidoamine is the product of the reaction between tetraethylenepentamine and the fatty acids of vegetable origin contained in the distillation residues of wood (TOFA) and the aromatic polyamine is diethyltoluenediamine (DETDA).

11. Composition according to claim 10, **characterized in that** the epoxy resin used is a mixture of resin resulting from the reaction between bisphenol A and/or bisphenol F and epichlorohydrin, preferably the resin resulting from the reaction between bisphenol A and epichlorohydrin, which is the resin diglycidyl ether of bisphenol A (DGEBA).

12. Composition according to claim 11, **characterized in that** the resin composition comprises, relative to the total weight of the resin composition:

- 70 to 90% by weight of at least one epoxy resin, preferably 85 to 90%,
- 5 to 15% by weight of a reactive diluent, preferably 8 to 12%,
- 5 to 15% by weight of a plasticizing diluent, preferably 5 to 10%,
- 0 to 3% by weight of a thixotropic agent, preferably 1 to 2%, and
- 0 to 2% of at least one surfactant, or sequestering agent, or water-repellent agent,

the sum of the components of the resin composition not exceeding 100%.

13. Use of a composition according to any one of claims 1 to 12 for preparing an encapsulated waste block.

14. Use according to claim 13, **characterized in that** said encapsulated waste block is prepared by a method comprising the steps consisting of:

(i) preparing an encapsulation composition by mixing a resin composition and a hardening composition as defined in any one of claims 1 to 12, and
(ii) incorporating the waste to be encapsulated in said encapsulation composition, and
(iii) encapsulating and cross-linking until a cured encapsulated waste block is obtained.

15. Use according to one of claims 13 or 14, **characterized in that** at least one of the following conditions is fulfilled:

- the waste to be encapsulated is in solid form or in semi-liquid form;
- the waste to be encapsulated is a radioactive or non-radioactive waste;
- said waste is selected from anionic or cationic ion-exchange resins and mixtures thereof, contaminated magnesium rods, irradiated metallic components and radioactive ash, or from heavy metals or materials containing them, metallic components in divided form originating from the dismantling of industrial workshops and products generating or releasing harmful substances;
- said encapsulated waste block comprises from 30 to 60% by weight of encapsulation composition and from 70 to 40% by weight of waste.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2825182
- US 4599196 A
- US 5416251 A
- FR 2931832
- EP 2297221 A

**Littérature non-brevet citée dans la description**

- *CHEMICAL ABSTRACTS,* 25214-70-4